# EUROPÄISCHE PATENTANMELDUNG

(11) **EP 3 047 988 A2**
(43) Veröffentlichungstag der Anmeldung: **27.07.2016**
(21) Anmeldenummer: 15197575.2
(22) Anmeldetag: 02.12.2015
(51) Int. Cl.: B60H 1/34, F16D 49/00, F16D 69/00, F16D 69/02

(54) **BREMSBAUGRUPPE UND REIBBELAG FÜR EINE BREMSBAUGRUPPE**

(30) Priorität: 21.01.2015 DE 102015100826
(71) Anmelder: TRW Automotive Electronics & Components GmbH, 78315 Radolfzell (DE)
(72) Erfinder: Hofmann, Jürgen, 67304 Eisenberg (DE); Demerath, Michael, 66909 Hüffler (DE)
(74) Vertreter: Prinz & Partner mbB

(57) **Zusammenfassung**

Bei einer Bremsbaugruppe (10) für einen Luftausströmer in einem Fahrzeug, mit zwei Bremsbauteilen (12, 16), die relativ zueinander bewegbar sind, wobei an zumindest einem Bremsbauteil (12, 16) ein Reibbelag (20) vorgesehen ist, der am jeweils anderen Bremsbauteil (16, 12) reibend anliegt und eine gegenseitige Bewegung der Bremsbauteile (12, 16) hemmt, ist vorgesehen, dass der Reibbelag (20) aus einem thermoplastischen Elastomer besteht, das eine Silikonbeigabe enthält.

Ein Reibbelag (20) für eine solche Bremsbaugruppe (10) besteht aus einem thermoplastischen Elastomer, das eine Silikonbeigabe enthält.

## Beschreibung

Die Erfindung betrifft eine Bremsbaugruppe für einen Luftausströmer in einem Fahrzeug, mit zwei Bremsbauteilen, die relativ zueinander bewegbar sind, wobei an zumindest einem Bremsbauteil ein Reibbelag vorgesehen ist, der am jeweils anderen Bremsbauteil reibend anliegt und eine gegenseitige Bewegung der Bremsbauteile hemmt. Die Erfindung betrifft des Weiteren einen Reibbelag für eine Bremsbaugruppe, insbesondere für ein Gelenk eines Luftausströmers.

In Luftausströmern für Fahrzeuge werden häufig an zueinander beweglichen Teilen Bremsbaugruppen verwendet, um die gegenseitige Bewegung der Bauteile zu hemmen. Dies kann beispielsweise bei einem beweglichen Bedienelement erfolgen, das drehbar oder verschiebbar am Luftausströmer gelagert ist. Über die Bremsbaugruppe kann das Bedienelement in der jeweils eingestellten Position fixiert werden, sodass beispielsweise die Richtung oder die Intensität der ausströmenden Luft zuverlässig eingestellt werden kann. Alternativ kann auch eine Umlenkeinrichtung über ein Gelenk, beispielsweise ein Kugelgelenk, im Luftausströmer gelagert werden, wobei die Bremsbaugruppe zwischen der Umlenkeinrichtung und dem Luftausströmer, beispielsweise im Gelenk, angeordnet ist, um ein unerwünschtes Verstellen der Umlenkeinrichtung im Fahrzeugbetrieb zu vermeiden. Darüber hinaus werden solche Bremsbaugruppen auch bei Verschlusselementen, beispielsweise einer Verschlussklappe, verwendet, um diese ebenfalls in der eingestellten Position zu halten. Die Bremsbaugruppe verbessert neben der sicheren Fixierung in einer eingestellten Position die Haptik des Luftausströmers, da ein definierter Widerstand beim Bedienen des Luftausströmers vorhanden ist. Zudem werden unerwünschte Geräusche, beispielsweise Klappergeräusche zwischen den einzelnen Bauteilen, verhindert, da durch die Bremsbaugruppe auch ein Spiel zwischen den Bauteilen reduziert oder beseitigt werden kann.

Die Bremsbaugruppe soll über einen möglichst langen Zeitraum einen gleichbleibenden Widerstand zwischen den zueinander beweglichen Bremsbauteilen sicherstellen. Zudem soll ein Quietschen oder unerwünschte Schabgeräusche verhindert werden.

Bisher werden Reibbeläge aus Silikon verwendet, die mit einem Einkomponenten-Spritzgussverfahren hergestellt sind oder in einem Zweikomponenten-Spritzgussverfahren gemeinsam mit einem Bremsbauteil hergestellt werden. Die Produktion solcher Silikonbauteile ist aber sehr aufwendig, da andere Fertigungsverfahren verwendet werden müssen als für die übrigen Kunststoffteile eines Luftausströmers. Zudem weist das Silikon nur eine begrenzte Abriebfestigkeit auf, sodass bereits nach einer kurzen Benutzungsdauer der Widerstand der Bremsbaugruppe abnimmt.

Aufgabe der Erfindung ist es, eine Bremsbaugruppe für einen Luftausströmer in einem Fahrzeug bereitzustellen, der über einen längeren Zeitraum einen gleichbleibenden Widerstand zwischen den sich zueinander bewegenden Bremsbauteilen bereitstellt. Aufgabe der Erfindung ist es des Weiteren, einen Reibbelag für eine solche Bremsbaugruppe bereitzustellen.

Zur Lösung der Aufgabe ist eine Bremsbaugruppe für einen Luftausströmer in einem Fahrzeug vorgesehen, mit zwei Bremsbauteilen, die relativ zueinander bewegbar sind. An zumindest einem Bremsbauteil ist ein Reibbelag vorgesehen, der am jeweils anderen Bremsbauteil reibend anliegt und eine gegenseitige Bewegung der Bremsbauteile hemmt. Erfindungsgemäß ist der Reibbelag aus einem thermoplastischen Elastomer hergestellt, das eine Silikonbeigabe enthält. Ein thermoplastisches Elastomer hat eine wesentlich bessere Abriebbeständigkeit als das bisher verwendete Silikon. Des Weiteren sind die Herstellungskosten wesentlich geringer, insbesondere bei Zweikomponentenspritzgussteilen. Durch geringe Silikonbeigaben können dennoch die positiven Effekte der bisher verwendeten Silikonreibbeläge genutzt werden. Mit dem erfindungsgemäßen Reibbelag kann somit ein wesentlich beständigerer Reibbelag bereitgestellt werden, sodass die Bremseigenschaften der Bremsbaugruppe über einen längeren Zeitraum aufrecht erhalten werden können.

Vorzugsweise liegt der Anteil der Silikonbeigabe im Bereich von 0,5 % bis 5 %. Bei diesem Silikonanteil können die positiven Eigenschaften des Silikons genutzt werden, ohne dass durch einen zu hohen Silikonanteil die Abriebbeständigkeit des Reibbelages zu stark abnimmt.

Der Reibbelag kann beispielsweise eine teilkugelförmige Reiboberfläche aufweisen und das jeweils andere Bremsbauteil eine teilkugelförmige Anlagefläche für den Reibbelag. Die Bremsbaugruppe kann so beispielsweise in ein Kugelgelenk integriert werden, sodass eine platzsparende Anordnung der Bremsbaugruppe innerhalb des Luftausströmers, insbesondere innerhalb eines Gelenks, möglich ist.

Vorzugsweise ist der Reibbelag form- und/oder stoffschlüssig mit dem Bremsbauteil verbunden, sodass sich dieser nicht vom Bremsbauteil lösen kann. Insbesondere kann der Reibbelag in einer Aussparung am Bremsbauteil angeordnet sein, so dass dieser nur geringfügig über die Oberfläche des Bremsbauteils hervorsteht. Die Bremsbauteile können in dieser Ausführungsform beispielsweise ein Kugelgelenk bilden, wobei die Reibfläche innerhalb des Kugelgelenks angeordnet ist und ein gegenseitiges Verschwenken oder Verdrehen der Bremsbauteile hemmt.

Der Reibbelag kann aber auch an einem Träger angeordnet sein, der federbeaufschlagt gegen das jeweils andere Bremsbauteil gedrückt wird. Durch eine Feder, die den Reibbelag bzw. den Träger federbeaufschlagt gegen eine Anlagefläche drückt, kann zusätzlich ein Verschleiß des Reibbelages ausgeglichen werden, sodass die Lebensdauer der Bremsbaugruppe zusätzlich verlängert werden kann.

Das erste oder das zweite Bremsbauteil sind beispielsweise mit einer Umlenkeinrichtung, einem Bedienelement oder einer Verschlussklappe gekoppelt, sodass deren Bewegung gehemmt werden kann. Dies ermöglicht eine bessere Einstellung der Umlenkeinrichtung, des Bedienelements oder der Verschlusskappe. Insbesondere kann dadurch die Haptik des Luftausströmers verbessert werden.

Die Bremsbaugruppe kann verwendet werden, um jede Art von Bewegung zwischen verschiedenen Bremsbauteilen im Luftausströmer zu hemmen. Die Umlenkeinrichtung, das Bedienelement oder die Verschlussklappe können also im Luftausströmer verschwenkt, verdreht oder verschoben werden.

Zur Lösung der Aufgabe ist des Weiteren ein Reibbelag für eine solche Bremsbaugruppe vorgesehen, insbesondere für ein Gelenk eines Luftausströmers, wobei der Reibbelag aus einem thermoplastischen Elastomer besteht, das eine Silikonbeigabe enthält.

Weitere Vorteile und Merkmale finden sich in der nachfolgenden Beschreibung in Verbindung mit den beigefügten Zeichnungen. In diesen zeigen:
- Figur 1 eine erfindungsgemäße Bremsbaugruppe,
- Figur 2 ein Bremsbauteil der Bremsbaugruppe aus Figur 1 mit einem erfindungsgemäßen Reibbelag.

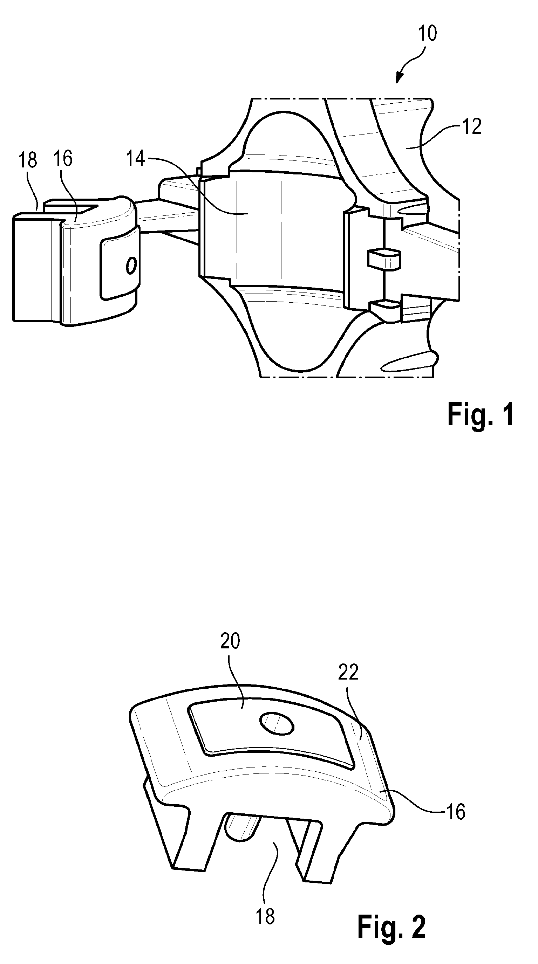

In Figur 1 ist eine Bremsbaugruppe 10 für ein Gelenk eines Luftausströmers in einem Fahrzeug gezeigt.

Ein solcher Luftausströmer weist üblicherweise ein Gehäuse auf, in dem eine Luftleiteinrichtung schwenkbar zur Längsachse des Luftausströmers gelagert ist. Die Luftleiteinrichtung ist beispielsweise mit einem Gelenk drehbar und schwenkbar im Gehäuse des Luftausströmers gelagert, wobei die Lagerung entweder außenseitig an der Luftleiteinrichtung angeordnet sein kann, falls diese kugelförmig ausgebildet ist, oder ein separates Gelenk, beispielsweise ein Kugelgelenk vorgesehen ist.

Ein solches Kugelgelenk weist einen Kugelkopf sowie eine Lagerschale auf, wobei der Kugelkopf oder die Lagerschale an der Luftleiteinrichtung befestigt ist und das jeweils andere Bauteil fahrzeugfest gehalten ist. Am Kugelkopf und der Lagerschale sind Gleitflächen vorgesehen, die so ausgebildet sind, dass der Kugelkopf in der Lagerschale verschwenkt und/oder verdreht werden kann.

An zumindest einem der Bauteile Kugelkopf oder Lagerschale ist ein Reibbelag vorgesehen, durch den die Reibung zwischen dem Kugelkopf und der Lagerschale vergrößert wird. Dadurch wird sichergestellt, dass die Luftleiteinrichtung nach einem Einstellen der Ausströmrichtung in der eingestellten Position verbleibt und sich nicht, beispielsweise durch Vibrationen im Fahrzeug, verstellt.

Die in Figur 1 gezeigte Bremsbaugruppe 10 weist ein erstes Bremsbauteil 12 auf, an dem eine teilkugelförmige Lagerschale 14 für ein solches Kugelgelenk vorgesehen ist. Das zweite Bremsbauteil 16 kann in einer Aussparung am Kugelkopf eingesetzt werden und durch eine Feder, die an einer rückseitigen Aufnahme 18 angreifen kann, federbelastet gegen die Lagerschale 14 gedrückt werden. Die Oberfläche des zweiten Bremsbauteils 16 ist teilkugelförmig ausgebildet, sodass diese einen Abschnitt des Kugelkopfs bildet.

Das zweite Bremsbauteil 16 bildet hier einen Träger, auf dem ein Reibbelag 20 vorgesehen ist, der in montiertem Zustand der Bremsbaugruppe 10 am ersten Bremsbauteil 12, insbesondere an der Lagerschale 14 anliegt und ein gegenseitiges Verdrehen oder Verschwenken des ersten und des zweiten Bremsbauteils 12, 16 hemmt. Durch die Federkraft, mit der das zweite Bremsbauteil 16 gegen die Lagerschale 14 gedrückt wird, kann der Reibungswiderstand eingestellt werden.

Der Reibbelag 20 ist in der hier gezeigten Ausführungsform form- und stoffschlüssig mit dem zweiten Bremsbauteil 16 ausgebildet, insbesondere mit diesem in einem Zweikomponentenspritzgussverfahren hergestellt.

Die Bremseigenschaften der Bremsbaugruppe 10 sind von der Wahl bzw. der Zusammensetzung des Reibbelages 20 abhängig. Um eine komfortable Bedienung des Luftausströmers bereitzustellen, ist es erwünscht, dass über einen möglichst langen Zeitraum gleichbleibende Bedienkräfte des Luftausströmers, also ein gleichbleibender Widerstand der Bremsbaugruppe 10, bereitgestellt wird. Zudem sollen Quietsch- oder Schabgeräusche zuverlässig verhindert werden. Eine weitere Vorgabe ist, dass der Widerstand, mit dem die beiden Bremsbauteile 12, 16 zueinander bewegt werden können, während der Bedienung der Bremsbaugruppe möglichst gleichbleibend ist. Ein erhöhter Widerstand zu Beginn des Dreh- oder Schwenkvorgangs ist nicht erwünscht, da dieser zu erhöhten Bedienkräften führt und beim Lösen der Haftreibung der Bremsbauteile 12, 16 aufgrund der eingesetzten höheren Bedienkräfte ein zu starkes Verschwenken oder Verdrehen der Bremsbauteile zueinander und somit der Luftleiteinrichtung im Luftausströmer erfolgt.

Bisher werden Reibbeläge 20 aus Silikon verwendet, deren Produktion aber sehr aufwendig ist. Zudem nutzen sich Silikonreibbeläge sehr schnell ab, sodass die Bedienkräfte abnehmen bzw. in kürzeren Intervallen ein Austausch der Reibbeläge 20 erforderlich ist.

Um die Abriebfestigkeit des Reibbelags 20 zu erhöhen, wird statt den bekannten Reibbelägen ein Reibbelag 20 aus einem thermoplastischen Elastomer verwendet. Thermoplastische Elastomere weisen eine wesentlich höhere Abriebbeständigkeit auf, sodass die Langlebigkeit der Bremsbaugruppe 10 und des Reibbelages 20 deutlich verbessert werden kann.

Um die positiven Effekte der Silikonreibbeläge weiterhin nutzen zu können, wird dem thermoplastischen Elastomer eine Silikonbeigabe beigefügt. Diese beträgt zwischen 0,5% bis 5 %, sodass eine Reduzierung der Abriebfestigkeit zu einen zu hohen Silikonanteil vermieden wird.

Die Materialkombination aus einem thermoplastischen Elastomer mit einer geringen Silikonbeigabe führt zu einer sehr guten Haptik, da über einen sehr langen Zeitraum gleichbleibend hohe Bedienkräfte sichergestellt werden. Zudem ist ein Auftreten eines Stick-Slip-Effektes, bei dem aufgrund der Haftreibung, die größer ist also die Gleitreibung, ein Ruckeln aufgrund des Wechsels zwischen Haft- und Gleitreibung erfolgt, zuverlässig verhindert.

Zudem werden durch diese Materialkombination unerwünschte Geräusche, beispielsweise ein Quietschen oder Schabgeräusche des Reibbelags 20, verhindert.

## Patentansprüche

1. Bremsbaugruppe (10) für einen Luftausströmer in einem Fahrzeug, mit zwei Bremsbauteilen (12, 16), die relativ zueinander bewegbar sind, wobei an zumindest einem Bremsbauteil (12, 16) ein Reibbelag (20) vorgesehen ist, der am jeweils anderen Bremsbauteil (16, 12) reibend anliegt und eine gegenseitige Bewegung der Bremsbauteile (12, 16) hemmt, **dadurch gekennzeichnet, dass** der Reibbelag (20) aus einem thermoplastischen Elastomer besteht, das eine Silikonbeigabe enthält.

2. Bremsbaugruppe nach Anspruch 1, **dadurch gekennzeichnet, dass** die Silikonbeigabe im Bereich von 0,5% bis 5% liegt.

3. Bremsbaugruppe nach Anspruch 1 oder 2, **dadurch gekennzeichnet, dass** der Reibbelag (20) eine teilkugelförmige Reiboberfläche (22) aufweist und das jeweils andere Bremsbauteil (12, 16) eine teilkugelförmige Anlagefläche für den Reibbelag aufweist.

4. Bremsbaugruppe nach einem der vorhergehenden Ansprüche, **dadurch gekennzeichnet, dass** der Reibbelag (20) form- und/oder stoffschlüssig mit dem Bremsbauteil (12, 16) verbunden ist.

5. Bremsbaugruppe nach einem der vorhergehenden Ansprüche, **dadurch gekennzeichnet, dass** der Reibbelag (20) an einem Träger angeordnet ist, der federbeaufschlagt gegen das jeweils andere Bremsbauteil (12, 16) gedrückt wird.

6. Bremsbaugruppe nach einem der vorhergehenden Ansprüche, **dadurch gekennzeichnet, dass** das erste oder das zweite Bremsbauteil (12, 16) mit einer Umlenkeinrichtung, einem Bedienelement oder einer Verschlussklappe gekoppelt ist.

7. Bremsbaugruppe nach Anspruch 6, **dadurch gekennzeichnet, dass** die Umlenkeinrichtung, das Bedienelement oder die Verschlussklappe verschwenkt, verdreht und/oder verschoben werden können.

8. Reibbelag (20) für eine Bremsbaugruppe (10) nach einem der vorhergehenden Ansprüche, insbesondere für ein Gelenk eines Luftausströmers, **dadurch gekennzeichnet, dass** der Reibbelag (20) aus einem thermoplastischen Elastomer besteht, das eine Silikonbeigabe enthält.
